# EUROPEAN PATENT SPECIFICATION

(11) **EP 3 710 409 B1**
(45) Date of publication and mention of the grant of the patent: **02.09.2026**
(21) Application number: 18815026.2
(22) Date of filing: 16.11.2018
(51) Int. Cl.: C02F 3/06, C02F 3/10, C02F 3/12

(54) **METHOD FOR TREATING URBAN WASTE WATER**
VERFAHREN ZUR BEHANDLUNG VON STÄDTISCHEM ABWASSER
PROCÉDÉ DE TRAITEMENT D'EAUX USÉES URBAINES

(30) Priority: 16.11.2017 IT 201700130809
(43) Date of publication of application: 23.09.2020
(73) Proprietor: Consiglio Nazionale Delle Ricerche, 00185 Roma (IT); Cisa S.P.A., 74016 Massafra (TA) (IT)
(72) Inventor: DI IACONI, Claudio, Bari (IT); DE SANCTIS, Marco, Bari (IT); FERRARA, Lorenzo, Taranto (IT)
(74) Representative: Conversano, Gabriele
(86) International application number: PCT/IB2018/059030
(87) International publication number: WO 2019/097463

(56) References cited:
- EP-A1- 2 952 483
- EP-A2- 0 302 545
- EP-B1- 2 307 323
- US-A- 3 956 128
- ADRIANA MARIA LOTITO ET AL: "Sequencing batch biofilter granular reactor for textile wastewater treatment", NEW BIOTECHNOLOGY, ELSEVIER BV, NL, vol. 29, no. 1, 20 April 2011 (2011-04-20), pages 9 - 16, XP028109832, ISSN: 1871-6784, [retrieved on 20110430], DOI: 10.1016/J.NBT.2011.04.008
- DI IACONI CLAUDIO ET AL: "Upgrading small wastewater treatment plants with the sequencing batch biofilter granular reactor technology: Techno-economic and environmental assessment", JOURNAL OF CLEANER PRODUCTION, ELSEVIER, AMSTERDAM, NL, vol. 148, 6 February 2017 (2017-02-06), pages 606 - 615, XP029939587, ISSN: 0959-6526, DOI: 10.1016/J.JCLEPRO.2017.02.034
- ANONYMOUS: "MBBR media, k1/k3 kaldness media", 2 November 2016 (2016-11-02), XP055474817, Retrieved from the Internet <URL:http://www.chemicalpackings.com/product/mbbr-media.html> [retrieved on 20180514]

## Description

The present Patent application for industrial invention relates to an urban waste water treatment plant, and to the treatment process which can be carried out by means of such plant, able to reduce the sludge quantity to be disposed of compared to the currently known techniques at the state of the art.

In particular, and as better described in the following, the present invention relates to a biological process with sludge age greater than 100 days, able to reduce the sludge quantity to be disposed of up to 80%. This process can be obtained conveniently both by the realization of new plants and by converting the stage of activated sludges of an existing urban waste water purification plant.

The plant used in the method according to the invention, by means of the configuration of the plant elements (tanks compartmentation, adoption of a suitable filling material and waste water movement systems) and by means of the adoption of particular operational conditions (waste water supplying mode and management of the organic load during starting), allows to transform the existing activated sludge in a particular kind of sludge, made up of biofilm and granules bounded in a plastic porous means.

Moreover, the physical features of the plant (in particular the tank compartmentation and the compartments filling with a plastic supporting means with determined features) and the obtained sludge (in particular the high compactness and the fact that it has its own shape and volume) allow to obtain the separation of the sludge from the liquid phase at the same time of the treatment, thus allowing to reach high concentrations without the need of a sedimentation stage.

Another advantage, which will be clear in the following, is that the plant used in the method according to the invention has a simplified treatment scheme compared to the treatment schemes known at the state of the art, since the only one basin can replace the whole water line of the purification plant (the primary and the secondary sedimentation are no more needed) and part of the sludge line (the anaerobic/aerobic digestion stage is no more needed since the very reduced sludge quantity produced results yet stabilized).

Yet, another advantage of method according to the invention is that the synergic effect deriving from the waste water supplying discontinuous mode, from the waste water supplying from the bottom of the sludge area, from the movement by plug of the waste water in the sludge area (due to the little porosity determined by the high sludge quantity provided) and from the absence of oxygen added to the waste water in the first part of the treatment, allow to obtain and maintain in time a particular kind of sludge (not known at the state of the art), made up of biofilm and granules bounded in a plastic porous means with determined features, which results to be mainly made up of bacterial species able to store the organic material present in the waste water and which result to have a low growth rate (and so little sludge production), which in the operational conditions of the plants known at the state of the art cannot predominate.

### State of the art

Nowadays, the management of the purification sludges represents one of the main problems in the whole treatment cycle of urban sewage. In fact, even if the sludges volume produced by an urban waste water purification plant represents only 1-2% of the volume of the waste water flowing in the plant, its treatment and final disposal can bear up to 60% on the purification costs. Therefore, among waste water purification plants managers there is currently a strong interest in technological solutions able to reduce the production of sludges to be disposed of.

The currently available approaches for the reduction of purification sludges are divided in two great groups: those acting on the water line and those acting instead on the sludge line. The first ones are particularly interesting since they handle the problem of the sludges at its origin, thus reducing the quantity to send to the sludge line of the purification plant. The plant according to the present invention acts on the water line of a purification plant.

The currently available technologies for the reduction of sludges production in the water line are based on: (i) the cell lysis and cryptic growth, (ii) the metabolic decoupling or (iii) the maintenance energy.

The main disadvantage of the techniques based on cell lysis and cryptic growth is that chemicals and operational conditions to be used to obtain high sludge reductions can impair seriously the purification process, besides making the process expensive. Examples of processes of this kind available on the market are Lyso^{™} (Rivoira-Praxair), Biolysis^{®} (Ondeo-Degremont), Aspal^{™} (Air Liquide), Bioleader^{™} (Kurita Water Industries Ltd). The processes exploiting metabolic decoupling are simple to be implemented, even if they can have environmental pollution problems due to xenobiocity of the substances used in the process. If decoupling is obtained by alternating oxic and anaerobic conditions (without using xenobiotic substances), the reduction of the sludge quantity does not usually exceed 50%. Examples of processes of this kind, available on the market, are the Cannibal^{®} system (Siemens), alternate cycles in Water^{®} line (Ingegneria Ambiente) and OSCAR (ETC-Engineering solutions).

The processes exploiting the cell maintenance are based on the increase in sludge concentration inside the biological tanks, to reduce the net growth yield. In the traditional systems with activated sludges, such strategy is sensibly hindered by the fact that the tank sludge concentration cannot be increases beyond a certain value since, owing to its low separation speed from the liquid phase, it would be needed secondary settlers with considerable dimensions. Moreover, the increase in the sludge concentration would arise serious problems for its suspension in the biological tank. The problems linked to the great dimensions of secondary settlers can be solved by using membranes, i.e. transforming the process with activated sludges in an MBR system (Membrane Biological Reactor). Anyway, there persist the problems linked to the high concentrations of sludge suspended in tank which can cause membranes dirtying problems, with the need of very frequent cleaning operations, limitations in oxygen transferring and reduction of sludge biologic activity.

Some Patent documents deal with the described problems and try to provide devices able to optimize the sludge removing process.

Document EP1373146 describes a plant comprising a biofilter with a support for sludge having a surface of at least 50 m² per m³ of biofilter volume. Said support for sludge is made up of plastic movable elements which can be packed so that they cannot move.

The plastic movable elements are described, for example, in the document US5458779, as plastic elements with a surface twice the surface of smooth elements with same dimensions, and density little lower than 1 kg/dm³. The linear dimensions of the elements are between 0,5 and 1,5 cm, and the preferred shape is the one of tube pieces provided with inner partitions, for example cross shaped, and possibly tongues of the outer surface of the tube.

Document CN105399285 describes a continuous treatment plant comprising an anaerobic and aerobic stage in series which uses selected microorganism strains, and which uses a filling material with a porosity higher than 90% and a specific surface greater than 20 m²/g.

In document EP2307323 it is described a plant for civil and industrial sewage purification, comprising a biofilter containing supporting means for sludge and an aeration basin provided with a device for insufflating air and connected to said biofilter by means of pipes apt to allow the circulation of sewage from said tank to said biofilter and vice versa. The supporting means suggested in EP2307323 have porosity between 60 and 80% and dimensions of voids between 50 and 80 mm³. The plant described in EP2307323 allows to carry out a discontinuous purification process in which sewage is circulated between the aeration basin and the biofilter and is subjected sequentially to aeration steps in the basin and biological oxidation in the biofilter.

Anyway, the plant described in document EP2307323 has some technical limits: in particular the plant needs two basins (biofilter and aerator) and the circulation between the two of them occurs by means of a pipe and dedicated pumping means. Obviously the fact that the whole flowrate has to pass through a pipe and so has to be let in a very limited area of the aerator, besides increasing sensibly the flow speed generates also problems of lack of homogeneity of the liquid phase (phenomenon which becomes more marked with plant dimension increase) compared to the solution according to the present invention which will be described in the following. Moreover, the plant described in EP2307323 uses a compacting material with a porosity lower than 80%. Since porosity is the space of the material which can be destined to sludge, it is quite clear that increasing the porosity value allows to increase, with equal basin dimension, the space destined to sludge and, so to reduce the frequency of cleaning operations, and so the production of sludge. Moreover, the plant described in document EP2307323 provides the inlet of waste water to be treated exclusively in the aerator.

Considering that the waste water entering the plant contains suspended material, the plant described in EP2307323 does not allow to carry out a separation of liquid and solid phase, as instead can be obtained with the plant and method described in the following.

In fact, at the end of the addition of the waste water in the aerator there can be reached high concentrations of suspended solids. Therefore, even if in the description of EP2307323 there is indicated the oxygen delivery in an area free of suspended material, this does not occur really.

Moreover, the aerator, both in case of mechanical mixing and with air, functions comparably to a complete mixing reactor. Considering that the waste water is added to a portion of effluent provided in the aerator, such configuration (i.e. the addition of waste water in a complete mixing basin) can lead, especially in case of not very concentrated urban waste water (i.e. that for example produced in areas with high water provision or relating to sedimented discharges), to a rather strong dilution of the aerator content (in terms of composition of the various pollutants) with negative side effects on the sludge compactness due to a little pronounced alternation of "feast" (abundance) and "famine" (famine) conditions of organic substrates (pollutants commonly present in urban sewage) which is basic for the selection in the sludge of species with low growth rate. In other words, the waste water which is really supplied to the biofilter is not the discharge to be treated but the one deriving from its dilution with the purified effluent. This determines a reduction of the value of some parameters of what is supplied to the biofilter, simply under the effect of dilution. For example, the concentration of COD ("chemical oxygen demand") could not be enough for causing those "storage" phenomena (storage) to occur, which are activated by the alternation of the "feast" (abundance) and "famine" (famine) conditions and which are decisive for the formation of granular sludges, which form the basis of the present invention, as well as the compactness of traditional sludges such the ones of the invention EP2307323.

In the document US3956128 it is described a system for sewage treatment by means of the "contact-stabilization" process. The device described comprises a first area (contact area) in which the waste water to be treated is inlet, which is immediately oxygenated by insufflating air and mixed with the sludge present in the system. The suspended mix (comprising both sludge and waste water) is then passed through a spiral pipe, oxygenated again with air and then introduced in the second area (stabilization area). In such area (partially filled with porous material) the degradation of the organic material adsorbed on the sludge as well as the separation of the solid phase (sludge) from the liquid phase (effluent) is completed. This last one is discharged by gravity from the bottom of the reactor, while the sludge is partially held by the filling material and partially recirculated in the first area to start a new sequence of the contact-stabilization process.

The process described in US3956128 A has some technical limits, which are also common to many treatment systems with activated sludges. First of all the waste water is constantly supplied, oxygenated and mixed to sludge; these conditions of high presence of oxygen, both dissolved and in bubble shape, and substrate limit the efficacy of the reduction of the sludge production (as better described in the following). Secondly, it is not provided a tank in which there is only treated liquid, but in both the tanks there are provided both liquid and sludge, and this prevents from realizing different conditions between the two tanks, optimized as a function of the matrix contained therein.

Finally, since in the second tank both sludge and liquid are provided, it cannot be supposed the use of a pump for the extraction of the treated effluent, whose flowrate is so significantly influenced by the percolation speed through the porous means provided in the stabilization area which tends to be occluded while the system functions. Therefore, frequent cleaning of such porous means can be supposed.

Other plants are disclosed in Adriana Maria Lotito et al.: "Sequencing batch biofilter granular reactor for textile wastewater treatment", New Boiotechnology, Elsevier BV, NL, vol. 29, no. 1, 20 April 2011, pages 9-16 and Di Iaconi, Claudio et al.: "Upgrading small wastewater treatment plants with the sequencing batch biofilter granular reactor technology: Techno-economic and environmental assessment", Journal of cleaner production JOURNAL OF CLEANER PRODUCTION, , Elsevier BV, NL, vol. 148, 6 February 2017 , pages 606-615.

### AIM OF THE INVENTION

Therefore, aim of the method of the present invention is to provide an urban waste water treatment plant which overcomes the limits linked to the embodiments known at the state of the art, and at the same time is able to reduce significantly the quantity of sludge which is usually produced during purification.

In particular the method of the present invention provides an urban waste water treatment plant in which the only one tank, which is also yet provided in the existing plants, can carry out the function of sludge separation from the liquid phase and their respective containment (this is a particularly important feature in the existing little plants, which are usually made up of a single tank), in which the linear circulation speeds of the liquid phase, at equal flowrate and plant dimension, are lower than the circulation speeds needed in the plants known at the state of the art, and in which the features of the porous means and the process conditions are configured to maximize the volume which can be occupied by the sludge and to optimize the features in terms of compactness and stability.

According to another aim, the present invention provides an urban waste water treatment plant which allows to implement a biological process able to increase the concentration of sludge present to reduce the quantity of sludge in excess to be disposed of compared to what occurs with the plants known at the state of the art, and which allows to obtain, in the plant outlet, a yet stabilized excess sludge, i.e. having an organic content lower than 60%.

Yet, according to another aim the present invention provides a way to separate the suspended sludge in the tank with activated sludge of a purification plant by bounding it and compacting it in a plastic porous means with determined features in order to avoid the solid-liquid separation stage (known also as secondary settler) which usually represents the bottleneck of traditional purification plants based on the process with activated sludge.

Yet, according to another aim the present invention provides a way to bound in the inner voids of a plastic porous means with determined features, as well as in the spaces generated by its packing, quantities of sludge up to 10 times higher than the ones present in the tanks with activated sludges.

Yet, according to another aim the present invention provides a way to provide a granular sludge bounded in the pores of a plastic porous means with determined features.

### Brief description

The present invention realizes the prefixed aims since it is a method providing an urban waste water treatment plant, comprising:
- a tank (1) subdivided in at least two distinct portions (2, 3), said at least two distinct portions (2, 3) comprising at least an accumulation area of the sludge (2) and at least an accumulation area of the liquid phase (3),
- at least a feeding pipe of the waste water to be treated;
- at least a recirculation pipe of the liquid phase;
- at least a discharge pipe of the effluent treated, withdrawn from said at least one liquid phase area (3),
- means for oxygenating liquid comprised in the liquid area, wherein
- said feeding pipe of the waste water to be treated is configured so that the waste water is inlet on the bottom of said at least one sludge area and in discontinuous mode;
- inside said at least one sludge area (2) it is provided porous material, contained between two containment planes, configured to allow the filtration of the waste water with removal of the suspended material;
- said tank (1) is subdivided in said at least two distinct portions by means of one or more vertical partitions (23) lower than the walls of the tank (1), so that the liquid from which the suspended material was removed in said at least one sludge area (2) can overflow from said at least one sludge area (2) to said at least one liquid phase area (3);
- the bottom of said at least one liquid phase area (3) is connected with the bottom of said at least one sludge area (2) by means of a pipe and pumping means which allow the liquid to recirculate from the bottom of the liquid phase area (3) to the bottom of the sludge area (2),
wherein said plant further comprises a recirculation pump configured to recirculate the liquid from the liquid phase area (3) to the sludge area (2) and is further configured to insufflate pure gaseous oxygen in the delivery pipe of said recirculation pump.

The mehtod for urban waste water treatment further comprising the steps of:
- introduction of the waste water to be purified, previously screened or sedimented, on the bottom of said at least one sludge area (2), so that the waste water crosses bottom-up said porous material by plug movement, thus separating from the suspended solids, and arrives up to the level of said partitions (23), from which the only liquid phase of the waste water falls in said at least one liquid phase area (3),
- recirculation of the liquid from the bottom of said liquid phase area (3) to the bottom of said sludge area (2), so that the liquid rises again, with a geometric rising speed between 1 and 5 m/h, along the height of said at least one sludge area (2), crossing said porous material, and arrives up to the level of said partitions (23), to fall then again in said at least one liquid phase area (3), from the bottom of which it is again and repeatedly sent, by means of said pumping means, to the bottom of said sludge area (2);
- oxygenation of the liquid phase provided in said at least one liquid phase area (3) by injection of pure gaseous oxygen in the recirculation current of the liquid phase;
- extraction of the waste water treated from said at least one liquid phase area (3).

### FIGURES

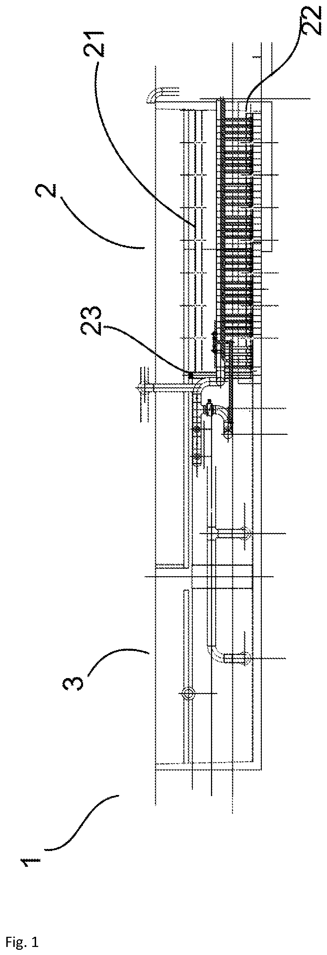

These and other advantages will be clear from the detailed description of the plant and the relative treatment process, which will be described in the following with reference to the appended figures 1 to 4.

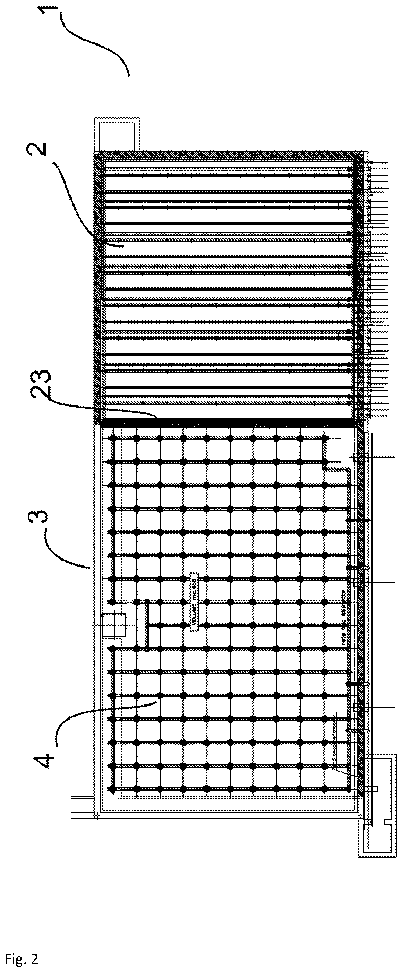

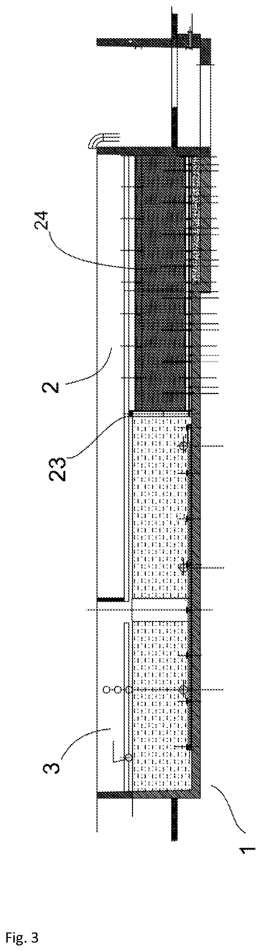

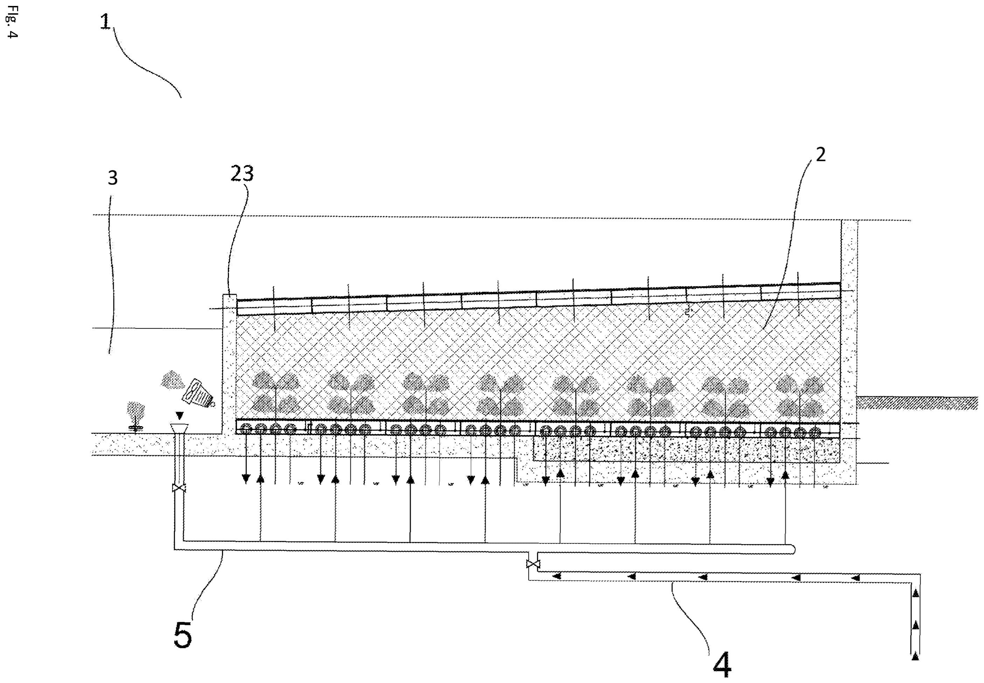

In figures 1 and 3 there are shown two sectional views of a preferred embodiment of the plant used in a method according to the invention, in which it is shown a tank in which a partition is realized to create two distinct areas, the sludge area and the liquid phase area; in figure 2 it is shown a top view of the same tank. In figure 4 it is shown a sectional view of the tank with the indication of the waste water feeding pipe.

### Description of the invention

Before the following description, it is to be said that the plant used in the method of the present invention can be obtained simply by modifying the tanks of existing treatment plants. Therefore, the process according to the invention can be obtained conveniently both by means of the realization of news plants and by converting the stage of activated sludge of an existing waste water purification plant.

With sludge it is intended the microbial group provided in the biological stage of a purification plant able to hold the suspended material and to remove pollutants present in the sewage. The sludge is the quantity of solids which is determined gravimetrically after drying at 105°C what is held by a filter having a porosity of 1,2 um. The quantity of sludge is expressed as the weight per volume (gSS/I). The organic content of sludge, expressed as weight per volume (gSV/I) is instead determined by difference between residue at 105°C and 600°C.

The net growth yield of the sludge in a reactor, Yₙ, is the quantity (weight) of sludge forming for quantity (weight) of removed pollutant, present both in suspended and soluble form. It is given by the difference between the growth linked to the consumption of the pollutant (Y) and the decay: ${Y}_{n} = Y - b ⋅ X ⋅ {\left(-dS/dt\right)}^{- 1}$ where:
- b is the decay rate, which considers all the factors responsible for the sludge concentration reduction (endogenous metabolism, death, lysis and sludge predation) [h⁻¹]
- X is the sludge concentration [quantity of solids per volume of reactor; gSS/I]
- (-dS/dt)⁻¹ is the opposite of the substrate consumption speed per concentration unit of the sludge (X) [h].

It is clear from the analysis of equation 1 that with the increase in the sludge concentration inside the reactor there is a reduction of net growth yield. The increase in the sludge concentration is obtained by increasing its hydraulic residence time in the reactor (also known as the sludge age), thus increasing its uptake in the system. With sludge age or sludge residence time in the reactor it is intended the average residence time interval of the same inside the reactor, which can be calculated also as the ratio between the sludge quantity in the reactor and the outlet flowrate of the same.

In the traditional systems with activated sludge, the possibility to increase the sludge residence time (sludge age) is sensibly hindered by the fact that the sludge concentration in the tank cannot be increased beyond a certain value since, owing to its low separation speed from the liquid phase, there would be needed secondary settlers with considerable dimensions. Moreover, the increase in the sludge concentration could arise serious problems for its suspension in the biological tank.

Moreover, in the systems known at the state of the art, the imposed oxygenation conditions limit the possibility to accumulate efficiently the sludge in the reactor (and so to reduce the production of sludge), for two different reasons. First of all the presence of air bubbles tends to favour scouring phenomena of the sludge (i.e. detachment and dragging upwards of the sludge) present on the filling means. Secondly, the presence of high quantities of oxygen together with the continuous and discontinuous supplying of the waste water to be treated favours the development of microbial species with high growth rate (and so with high production of sludge) which, by expanding, cover physically the species with low growth rate, which are inevitably repressed.

The solution to this problem is provided by the method according to the present invention by means of the adoption of plant modifications and modifications of the operational conditions which, in place of a sludge suspended in the sewage, allow to obtain from the activated sludge a particular kind of sludge made up of biofilm and granular sludge, bounded in a plastic porous means, which occupies part of the tank volume, and a sludge-free liquid phase.

With granular sludge it is intended a particular kind of biofilm which has chemical-physical features rather different from the ones of activated sludge.

In particular a granular sludge has:
- a sludge volume index (defined as the volume occupied by 1 g of sludge after 30 minutes of sedimentation) lower than 70 ml/g;
- a sedimentation speed higher than 3 m/h;
- a dimension of particles greater than 0,2 mm;
- a layer structure of the microbial populations.

In the plants used in a method according to the invention, the transformation of the activated sludge in sludge made up of biofilm and granular sludge occurs in consecutive distinct steps, described in the following.

It is to be specified that the steps described in the following are referred to the starting step of a new plant, defined as the time interval between the setting at work of the new plant and the first cleaning operation which identifies the completion of the transformation of the activated sludge in biofilm and granular sludge.

In the first step, the activated sludge is trapped in the filling means present in the sludge area (which in this step is free of sludge). In the next step, the fraction of the activated sludge adhered on the surface of the filling means leads to the formation of a sludge layer (biofilm) covering the whole surface of the supporting means. The activated sludge trapped in the interstitial pores of the filling means, both the inner ones of the same material and the ones generated by its packing in the sludge area, continues to develop instead as separated entity (inclusion sludge).

In order to improve the sludge compactness, avoiding that the same can be dragged by the waste water and liquid flow thus allowing its increase in weight and volume, there are adopted particular operational conditions: the volumetric organic load (defined as the quantity of COD (oxygen chemical demand) inlet in the plant a day and per volume of sludge area during the first two months from the starting step has to be lower than 0,15 kg of COD for m³ of filling material (i.e. for m³ of sludge area) and a day (kgCOD/m³·d), and the effective rising speed of the liquid in the sludge area has to be between 2 and 5 m/h, and preferably between 2,5 and 3,5 m/h.

The geometric rising speed is defined as the ratio between the recirculation flowrate between the area of the liquid phase and the one of the sludge (expressed in m³/h) and the geometric section of the sludge area (expressed in m²); the effective rising speed is defined as the product between the geometric rising speed and the porosity of the sludge area at a determined time t. St a time t=0 (i.e. when the plant is started), the porosity of the sludge area coincides with the porosity of the filling means (since the sludge is not present) and so the effective rising speed is equal to the product of the geometric rising speed for the porosity of the filling means (known feature). During the process, the porosity of the sludge area becomes lower than the porosity of the filling means under the effect of the sludge growth.

While the quantity increases (by the increase in the biofilm thickness and in the dimensions of the sludge particles contained in the inner and interstitial pores of the filling means) the porosity of the supporting means is reduced with consequent increase in the effective rising speed in the sludge area.

The increase in the effective rising speed due to the reduction of the filling means porosity (under the effect of the accumulation of the sludge) favours the flow conditions by plug which have a smoothing and rolling action of the sludge present in the interstitial pores, which takes the typical rounded and beveled shape of a river pebbles (from here the term granular sludge). Such sludge granules (pebbles) take then such dimensions that they cannot go out from the pores where they are developed/grown (i.e. they become granules trapped in the filling material).

It is to be specified that this compacting action is possible since the liquid crosses the sludge area by plug motion (plug-flow) and is free of gas bubble thus avoiding the above described scouring phenomena.

The features of the filling material (dimensions of inner and interstitial voids) have a decisive role in containing/holding granules. With inner void it is intended the voids inside the filling material while with interstitial voids it is intended the voids generated by packing various elements of the material in bulk (i.e. voids between element and element) whose volume will be determined both by the shape (included the provision of tongues) and the dimension and shape of the elements.

The reduced dimensions of the voids allow to trap low quantities of sludge (lead to low sludge ages and so lead to low reductions of the sludge growth yield and so of the production of sludge). Vice versa, great dimensions of voids allow to develop granules of great dimensions with consequent increase in sludge age and reduction of the growth yield. Anyway, if sludge granules of great dimensions are desired to be obtained it is needed to give them a certain compactness and stability. It is to be considered that, generally, while increasing the diameter of the granule its compactness is reduced. For this reason, the plant used in a method according to the present invention is conveniently operated with particular operational conditions, in the following described, in order to obtain granules which have high dimensions and high compactness at the same time.

In particular, as it will be described, in the sludge area, in all the process steps, there are no air and/or oxygen bubbles which would cause the scouring phenomenon, with detachment and dragging of part of the biofilm and granules.

In addition to the operational conditions, another aspect which allows to optimize the sludge features is the fact that the granules are bounded in a particular porous supporting means. Such aspect, in addition to allow to reach a higher sludge concentration in tank (up to 50 kg per m³ of sludge area) gives the process a higher strength since the granules are protected from possible destabilizing phenomena which usually torment the systems with suspended granular sludge (the long term stability of the granular sludge structure represents, in the known plants, one of the main problems which has actually limited the diffusion of the technology with granular sludge).

As yet said, in the process according to the present invention, the operational conditions have a decisive role both for the formation and the maintenance in time of such sludge (biofilm and granules).

In particular, the periodicity with which waste water is inlet in the tank represents a crucial operational parameter for obtaining and maintaining such sludge.

In fact, such parameter, if well managed, leads to the alternation of "feast" (abundance) and "famine" (famine) conditions of organic substrates (pollutants commonly present in municipal sewage) which support in time the structure of such sludge. The alternation of such conditions improves the level of sludge compactness.

In the treatment process according to the invention waste water is inlet inside the plant at substantially constant time intervals, preferably between 2 and 6 times a day and more preferably between 3 and 4 times a day.

The process discontinuity and the high sludge concentration determine in the sludge layers the periodical occurrence of aerobic/anaerobic reactions conditions, which lead to metabolic decoupling of the anabolic and catabolic phase, such that energy is dissipated without compromising the purification efficiency. Therefore, to the reduction of the sludge production due to the great sludge age it is added the one due to metabolic decoupling.

The management of the volumetric organic load introduced during the starting step, compared to the volume of the sludge area represents another important operational parameter for obtaining such particular sludge kind (biofilm and granules mix) and its bounding in the porous means. By analyzing the equation (1) it is noted in fact that a too high volumetric organic load during this period (i.e. when there is still a low quantity of sludge in the sludge compartment) would determine an increase in sludge growing speed, with the reduction of its compactness and consequent risk of detachment from the filling material. In other words, the anchorage of the sludge to the supporting means would become weaker with the risk that the same could be dragged from the liquid rising.

Therefore, during the first two months after starting a new plant the maximum organic load applied is lower then 0,15 kgCOD/m³·d. Only after the first two months of the starting step the organic load can be increased and anyway, preferably, it is managed so that it does not exceed the value of 0,5 kgCOD/m³·d in the third and fourth starting month.

The rising speed of the liquid phase through the porous means determines instead the shearing stresses acting on the sludge; if it is kept in the described values its compactness and density increase.

The process according to the present invention is provided with the following steps: supplying (or loading), recirculation, discharge and pause. The loading and recirculation steps can be overlapped for even considerable time fractions. This alternation of steps is conveniently controlled by an automation system based on a microprocessor and a timer which manages the functioning of the various devices interlocked to the plant: feeding pumps, recirculation pumps, aeration/oxygenation system, extraction pumps of the effluent treated. In addition, such system is connected to a series of level sensors and for detecting the physical and chemical parameters (in particular ammonia, oxidized nitrogen and COD) whose values, measured on line, can vary the times of the various steps.

During the feeding step, the waste water to be purified (screened or sedimented) is sent, by means of a suitable pump, in the bottom of the sludge area from where it rises up to the upper portion of the sludge area, while is subjected to a filtration with removal of suspended material, and falls then in the liquid phase area.

When a predetermined level in the liquid phase area is reached (fixed by the operator), also the recirculation pump is activated which begins to recirculate the liquid from the liquid phase area to the sludge one, thus beginning the recirculation step, while the feeding pump continues to inlet new sewage on the bottom of the sludge area (loading and recirculation steps overlapping). The recirculated liquid rises along the height of the sludge area and then falls in the liquid phase area, where it is oxygenated by means of injection of pure gaseous oxygen in the recirculation current (4) from which it is repeatedly sent again in the sludge area to fall again in the liquid phase area.

With regards to the advantages of the waste water inlet in the bottom of the sludge area, it is to be specified that, in plants known at the state of the art (as for example the one described in EP2307323) the waste water to be treated is inlet exclusively in the aerator. Considering that the waste water is added to a portion of yet treated sewage present in the aerator, the addition of the completely mixed waste water in the aerator can lead, especially in cases of not very concentrated urban waste water, to a rather strong dilution. In this cases the waste water which is effectively inlet in the sludge area is not the sewage to be treated but the one deriving from its dilution with purified effluent, and so the concentration of COD could not be enough for activating the alternation of the "feast" (abundance) and "famine" (famine) conditions and which form the basis of the formation of granular sludges, of the selection of the microbial species with low growth rate (and so with low production of sludge), and the compactness of the traditional biomasses. In the plant used in a method according to the present invention, the waste water to be treated is instead inlet directly on the bottom of the sludge area from where it rises "not diluted" and by plug flow thus avoiding the just described drawbacks and guaranteeing a higher penetration in the inner layers of the sludge, needed to select the bacterial species with low growth rate which usually occupy the most inner layers of the sludge.

When in the liquid phase area it is reached a second prefixed level, a level sensor sends a signal to the automation system which turns off the feeding pump. The liquid continues instead to be recirculated and possibly aerated between the two areas for the whole recirculation step. During the recirculation step, the aeration system can follow the same functioning cycle of the recirculation pump (i.e. it can always remain in function) or can follow a discontinuous functioning in order to enhance the denitrification process.

Anyway, such process is always present also when the aeration system is active: this is possible thanks to the high concentration of the sludge present in the sludge area and to the dynamic functioning conditions of the process, which, inside the sludge, generate adjacent aerobic (in which there is nitrification) and anoxic areas (where there is denitrification).

The activation and deactivation intervals of the aeration system can be managed by the automation system of the plant on the basis of the concentration values of ammonia and oxidized nitrogen, measured online by suitable sensors. However, the automation system can turn off the aeration system any time, in case the concentration of the dissolved oxygen, measured by a suitable probe, exceeds a determined set-point value set by the operator (for example 6 mg/l).

In order to enhance the treatment capacity, needed in cases of agglomerates with low water provision or raw waste water (i.e. not sedimented) pure gaseous oxygen is insufflated at predetermined time intervals in the delivery pipe of the recirculation pump. It is to be précised that the oxygen flow is controlled by mass flow controller so that it is guaranteed the absence of bubbles which would destabilize the sludge area. In particular, it is possible to operate with pure oxygen flow values up to 60 NmL per m³ of recirculated liquid phase. The high pressure present in the recirculation pipe, generated by the sludge high concentrations in the sludge area (values up to 2,5 bar) guarantees a high efficiency of solubilization of the inlet gaseous oxygen flow.

The recirculation step ends when a predetermined time interval elapsed or when the values of the chemical parameters (such for example COD, ammonia nitrogen and oxidized nitrogen), connected to the automation system are lower than the maximum limits allowed by the regulations for discharging the effluent treated in the receiving bodies of water.

When such situation occurs, the automation system determines the stop of the recirculation pump and the aeration system (end of the reaction step), thus activating the extraction pump of the effluent (which, in a preferred embodiment can be the same as the recirculation one) which actually begins the discharge step.

The extraction of the purified effluent from the compartment of the liquid phase occurs up to when the liquid level (detected by a sensor) in such compartment does not reach a prefixed value (by the operator). When such situation occurs, the automation system will determine the turning off of the pump thus ending the discharge step. In place of the signal of the level probe, the automation system can use also the one (if present) of the flowrate totalizator.

During the pause step of the process, the plant is prepared to begin a new sequence of steps as the just described one. Moreover, during such step the cleaning operation of the sludge area is carried out (if needed).

The cleaning operation is needed since while the system continues to function there is a continuous increase in sludge concentration with consequent reduction of the filling material porosity which can determine, with low values, a partial occlusion (clogging) of the sludge area. In order to avoid such phenomenon, a cleaning operation is carried out with the aim to bring the porosity value again in a suitable interval for the correct functioning of the system, by means of "forced" extraction of a portion of the sludge present.

The cleaning operation has the same role of the purge current in the traditional systems with activated sludge; both determine the production of sludge in excess of the process. Unlike the purge current, the cleaning operation is carried out in a discontinuous way, i.e. only at reaching a determined value of the loading losses recorded on the bottom of the sludge area. Such set-point sludge is chosen on the basis of various factors, such as the height of the sludge area, the kind and composition of the waste water to be treated, injection and flow of pure oxygen, and the kind and level of treatment to be carried out (carbon removal with or without nitrogen removal).

The cleaning operation is carried out with compressed air at 3-5 bar which is inlet for about 1-2 minutes by means of a dedicated pipe provided on the bottom of the sludge area.

According to another embodiment, in addition to the pipe on the bottom of the sludge area also a pipe can be used which develops along the height of the sludge area so that it reaches more efficiently also the higher layers. The compressed air jet determines the detachment of a portion of sludge from the plastic supporting material (mainly the one arranged in the lower portion); the sludge detached settles on the bottom of the sludge area and can be extracted as "liquid sludge" by activating a suitable pump. The functioning time of the extraction pump of the cleaning sludge is preferably set by the value provided by a probe sensible to the suspended solids, positioned in the liquid interspace under the filling material: a value of suspended solids lower than a threshold will determine the pump to be turned off. Once the discharge step and the possible cleaning operation of the bed of the sludge compartment are ended, the process provides a new sequence of steps as the just described one.

After describing the process desired to be implemented, it is described in the following a preferred embodiment of a plant used in a method according to the invention.

The plant used in a method according to the invention comprises at least a tank (1) subdivided in at least two distinct portions (2, 3) by one or more vertical partitions (23). The tank is subdivided in at least an accumulation area of the sludge (2) and at least an accumulation area of the liquid phase (3). In case of subdivision in more than two areas, preferably but not limitingly, the number of the liquid phase areas and the number of the sludge areas will be equal. For simplicity of description, in the drawings it was referred to tanks with rectangular shape, on the understanding that by suitable configuration of the partitions the plant can be realized with tanks with different shape plan, for example circular.

The vertical partitions (23) separating the various areas, as shown in figure 1, are lower than the walls of the tank (1), so that the liquid can overflow from an area to the other one by gravity, and in particular can overflow from the sludge area (2) to the liquid phase area (3). Preferably, the vertical partitions are less than 20 cm, preferably between 5 and 10 cm, lower than the walls of the tanks, but clearly the height needed depends on the flowrate of the liquid to be overflown for partition section.

The containment tank of the liquid phase has also the function of the liquid phase oxygenation, therefore it is provided with a suitable aeration system. Preferably, the aeration system comprises pans configured to inject air micro-bubbles, positioned on the bottom of the tank and connected to a compressor/blower.

As it is shown in figure 2, on the bottom of the sludge area (2) a series of double pipe couples develop, parallel to each other, for feeding waste water (4) and liquid phase (5) respectively, air for cleaning operations (both on the bottom and at mid height) and pure oxygen. On each one of these pipes, at regular intervals, there are provided branches for introducing air, pure oxygen and waste water and liquid phase.

The sewage is inlet under the containment material. The cleaning air can be inlet both under the containment material and along the height of the same (at least up to mid height). This allows to carry out a more efficient cleaning.

Therefore, inside the sludge area, there is provided a regular arrangement of branches for feeding air, pure oxygen, waste water and liquid phase. Preferably the distance in both directions between two inlet branches is between 1 and 3 meters, and more preferably between 1,5 and 2 meters.

Still on the bottom of the sludge area, on one of the walls of the tank there are provided a series of holes for housing pressure probes for measuring the loading loss needed for the cleaning operations to be carried out.

Still in the same sludge area (2) there are provided higher (21) and lower (22) planes for the containment (packing) of the porous material (24). Said planes are configured so that waste water, liquid phase and cleaning air flowrate pass, holding the porous material. The containment lower plane is horizontal and preferable positioned on the feeding pipes of air, pure oxygen, waste water and liquid phase. The higher containment plane is instead inclined (with a maximum inclination of 5° to the horizontal) so that the liquid is conveyed more rapidly towards the spillway partition thus avoiding that the same can stagnate in the area on the sludge area with possible proliferation of weeds above all in the periods of maximum incidence of the solar radiation.

Each one of the two containment planes will be provided with housings for mounting a suitable number of diffusors for the introduction of waste water and cleaning air and for recirculation of the liquid phase. Preferably there will be provided between 20 and 50 diffusors per m², each one provided with between 4 and 12 openings between 3 and 5 mm for the introduction of waste water which, as known, contains also suspended particles.

As yet said, the volume of the sludge area (2), comprised between the two horizontal containment planes is filled with a porous means having a specific surface comprised between 500 and 800 m²/m³, a porosity higher than 80%, preferably between 82% and 90%, and dimensions of the single element between 5 and 20 mm and preferably between 7 and 18 mm. The single element is also of such geometry that it is subdivided in 3 or more areas. According to a preferred embodiment the single element is made up of a plastic cylinder, provided inside with partitions and on the outer surface with tongues. For a good functioning, elements of such geometry have such dimensions that they have inner and interstitial voids (generated by the packing of the various elements) between 90 and 500 mm³, and preferably between 120 and 350 mm³.

After describing the configuration of the tanks, it is now possible to describe the plant engineering provision of the same.

Each liquid phase areas (3) is connected with the bottom of a sludge area (2) by means of one or more dedicated pipes (preferably between 2 and 4) and suitable pumping means which allow to make the liquid flow from the liquid phase area (3) to the sludge area (2).

Preferably, the liquid, free of suspended material, suitably aerated, is sucked from the lower part of the liquid phase area (3) and inlet in the sludge area (2) by means of the previously described feeding pipes and branches.

It is suitable to underline that sucking liquid from the lower part of the liquid area (3) serves to avoid to drag towards the sludge area the air bubbles present in the liquid phase area since, obviously, the gas bubbles tend to go upwards. Moreover, the possible injection of pure oxygen in the recirculation pipe of the liquid phase or in the bottom of the sludge area is carried out in a controlled way, i.e. by metering oxygen so that the saturation concentration is not exceeded, so that the formation of bubbles in the sludge area is avoided, which would cause scouring phenomena.

Preferably, the liquid phase flowrate (and waste water flowrate during the feeding step) is such that in the sludge areas (2) there is a geometrical rising speed between 2 and 5 m/h, and more preferably between 2,5 and 3,5 m/h. The effective rising speed (effective rising speed) is clearly higher since a portion of the passage section is occupied by the porous material and the sludge developing during the process.

The liquid, once reached the upper portion of the partition of the sludge area (2), falls by gravity from the liquid phase area again in the higher portion of the liquid phase area (3) (it is to be remembered that the inner partitions are lower than the peripheral ones of the tank), and it is pumped again from the liquid phase areas to the sludge areas.

The plant is provided also with at least a feeding pipe of the waste water to be treated inside the sludge areas (3), with at least a recirculation pipe of the liquid from the liquid phase area to the sludge area and at least a discharge pipe of the effluent treated, withdrawn from the liquid phase area (3). Both these pipes are provided with suitable pumping means and controlled valves which allow their use at predetermined times.

Obviously all the valves of the plant and the movement pumps of the waste water and liquid phase can be interlocked to automation and control systems which allow their control both in manual way and by means of programed logics, by means of a microprocessor.

## Claims

1. A method for urban waste water, wherein the method comprises providing a wastewater treatment plant, comprising:
- a tank (1) subdivided in at least two distinct portions (2, 3), said at least two distinct portions (2, 3) comprising at least an accumulation area of the sludge (2) and at least an accumulation area of the liquid phase (3),
- at least a feeding pipe of the waste water to be treated;
- at least a recirculation pipe of the liquid phase;
- at least a discharge pipe of the effluent treated, withdrawn from said at least one accumulation area of the liquid phase (3),
- Means for oxygenating liquid comprised in the liquid phase area (3), wherein in said plant
- said feeding pipe of the waste water to be treated is configured so that the waste water is inlet on the bottom of said at least one sludge area;
- inside said at least one sludge area (2) it is provided porous material, contained between two containment planes, configured to allow the filtration of the waste water with removal of the suspended material;
- said tank (1) is subdivided in said at least two distinct portions by means of one or more vertical partitions (23) lower than the walls of the tank (1), so that the liquid from which the suspended material was removed in said at least one sludge area (2) can overflow from said at least one sludge area (2) to said at least one liquid phase area (3);
- the bottom of said at least one liquid phase area (3) is connected with the bottom of said at least one sludge area (2) by means of a pipe and pumping means which allow the liquid to recirculate from the bottom of the liquid phase area (3) to the bottom of the sludge area (2).
Wherein said plant further comprises a recirculation pump configured to recirculate the liquid from the liquid phase area (3) to the sludge area (2) and is further configured to insufflate pure gaseous oxygen in the delivery pipe of said recirculation pump,
And wherein said method comprises the steps of:
- introduction of the waste water to be purified, previously screened or sedimented, on the bottom of said at least one sludge area (2), so that the waste water crosses bottom-up said porous material by plug movement, thus separating from the suspended solids, and arrives up to the level of said partitions (23), from which the only liquid phase of the waste water falls in said at least one liquid phase area (3),
- recirculation of the liquid from the bottom of said liquid phase area (3) to the bottom of said sludge area (2), so that the liquid rises again, with a geometric rising speed between 1 and 5 m/h, along the height of said at least one sludge area (2), crossing said porous material, and arrives up to the level of said partitions (23), to fall then again in said at least one liquid phase area (3), from the bottom of which it is again and repeatedly sent, by means of said pumping means, to the bottom of said sludge area (2);
- oxygenation of the liquid phase provided in said at least one liquid phase area (3) by insufflating pure gaseous oxygen in said recirculation pipe, wherein the flow rate of said pure gaseous oxygen is controlled by metering oxygen so that the saturation concentration is not exceeded so that the absence of bubbles in the sludge area is guaranteed.
- extraction of the waste water treated from said at least one liquid phase area (3).

2. . A method according to claim 1, **characterized in that** said porous material is made up of elements with porosity higher than 0,8, dimensions between 5 and 20 mm and volume of interstitial voids between 90 and 500 mm³.

3. . A method according to any one of the preceding claims, **characterized in that** the higher one of said containment planes is inclined of maximum 5° to the horizontal direction.

4. . A method according to claim 2 **characterized in that** said elements comprise plastic cylinders provided with inner partitions.

5. . A method according to claim 4 **characterized in that** said elements comprise also tongues on the outer surface.

6. . Method for urban waste water treatment according to claim 1, wherein said pure oxygen flows between 10 and 60 NmL/h per m³ of recirculated liquid and preferably between 10 and 50 NmL/h per m³ of recirculated liquid.

7. . Method for urban waste water treatment according to claim 1 or 6 , **characterized in that** said geometrical rising speed is between 2,5 and 3,5 m/h.

8. . Method for urban waste water treatment according to any one of claims 6 to 7, **characterized in that** in the introduction step of the waste water to be treated, the quantities a day of waste water introduced are such that the volumetric organic load introduced during the first 2 months of the starting step is lower than 0,15 of COD per m³ of filling material and a day (kgCOD/m³·d), and lower than 0,5 kg of COD per m³ of filling material and a day (kgCOD/m³·d) in the third and fourth month of the starting step.

9. . Method for urban waste water treatment according to any one of claims 6 to 8, **characterized in that** said stop of pumping means occurs when the values of the chemical parameters describing the pollutant load in said waste water, measured by means of suitable sensors, are lower than a predetermined threshold.

10. . Method according to any one of claims 6 to 9 , **characterized in that** after said extraction of said waste water from said tank, if the load loss measured between upstream and downstream of said porous means exceeds a value between 1 and 2,5 bar the cleaning step of said porous means is carried out by means of compressed air at 1-4 bar, and preferably between 2 and 3 bar, insufflated from the bottom of said sludge area (2).

11. . Method according to claim 10, **characterized in that** the cleaning step of said porous means is interrupted when the load loss measured between upstream and downstream of said porous means results to be lower than 70% of the value of claim 11.

## Patentansprüche

1. System und Verfahren zur Behandlung von städtischem Abwasser, wobei das Abwasserbehandlungssystem Folgendes umfasst:
- einen in mindestens zwei separate Bereiche (2, 3) unterteilten Behälter (1), wobei diese mindestens zwei separaten Bereiche (2, 3) mindestens eine Schlammsammelzone (2) und mindestens eine Flüssigphasensammelzone (3) umfassen;
- mindestens eine Zuleitung des zu behandelnden Abwassers;
- mindestens eine Flüssigphasen-Rezirkulationsleitung;
- mindestens eine Ableitung für das behandelte Abwasser, die von der mindestens einer Flüssigphasensammelzone (3) abzweigt;
- eine Einrichtung zur Sauerstoffanreicherung der in der Flüssigphasensammelzone (3) enthaltenen Flüssigkeit, wobei in dem System:
- die Zuleitung des zu behandelnden Abwassers so konfiguriert ist, dass das Abwasser auf den Boden der Schlammsammelzone eingeleitet wird;
- innerhalb der Schlammsammelzone (2) ist ein poröses Material zwischen zwei Trennebenen angeordnet, das die Filtration des Abwassers unter Entfernung von Schwebstoffen ermöglicht;
- der Behälter (1) ist mittels einer oder mehrerer vertikaler Trennwände (23), die niedriger als die Wände des Behälters (1) sind, in mindestens zwei getrennte Bereiche unterteilt, sodass die Flüssigkeit, aus der in mindestens einer Schlammzone (2) Schwebstoffe entfernt wurden, aus dieser Schlammzone (2) in die mindestens eine Flüssigphasenzone (3) überlaufen kann;
- der Boden der mindestens einen Flüssigphasenzone (3) ist mittels eines Rohrs und einer Pumpe mit dem Boden der mindestens einen Schlammzone (2) verbunden, wodurch die Flüssigkeit vom Boden der Flüssigphasenzone (3) zum Boden der Schlammzone (2) zurückgeführt werden kann.
wobei das System umfasst ferner eine Umwälzpumpe, die konfiguriert ist, um die Flüssigkeit von der Flüssigphasenzone (3) zur Schlammzone (2) zurückzuführen und ferner konfiguriert ist, um reinen gasförmigen Sauerstoff in das Zuleitungsrohr der Umwälzpumpe einzuleiten,
und wobei das Verfahren folgende Schritte umfasst:
- Einleitung des zu reinigenden, zuvor gesiebten oder abgesetzten Abwassers in den Boden der mindestens einen Schlammzone (2), sodass das Abwasser durch eine kolbenartige Bewegung von unten nach oben durch das poröse Material fließt, sich so von den Schwebstoffen trennt und bis auf das Niveau der Trennwände (23) erreicht; wobei von dort gelangt nur noch die flüssige Phase des Abwassers in die mindestens eine Flüssigphasenzone (3);
- Rückführung der Flüssigkeit vom Boden der Flüssigphasenzone (3) zum Boden der Schlammzone (2), wobei die Flüssigkeit mit einer geometrischen Aufstiegsgeschwindigkeit zwischen 1 und 5 m/h entlang der Höhe der mindestens einen Schlammzone (2) aufsteigt, das poröse Material durchströmt und bis auf das Niveau der Trennwände (23) erreicht, bevor sie in die mindestens eine Flüssigphasenzone (3) zurückfällt und von deren Boden sie mittels der Pumpeinrichtung wiederholt zum Boden der Schlammzone (2) zurückgeführt wird;
- Sauerstoffanreicherung der Flüssigphase in der mindestens einen Flüssigphasenzone (3) durch Einblasen von reinem gasförmigem Sauerstoff; wobei die Durchflussrate des reinen gasförmigen Sauerstoffs durch Sauerstoffmessung so gesteuert wird, dass die Sättigungskonzentration nicht überschritten wird und somit die Blasenabwesenheit in der Schlammzone gewährleistet ist;
- Entnahme des behandelten Abwassers aus der mindestens einen Flüssigphasenzone (3).

2. Verfahren nach Anspruch 1, **dadurch gekennzeichnet, dass** das poröse Material aus Elementen mit einer Porosität von mehr als 0,8, Abmessungen zwischen 5 und 20 mm und einem Volumen der Zwischenräume zwischen 90 und 500 mm³ besteht.

3. Verfahren nach einem der vorhergehenden Ansprüche, **dadurch gekennzeichnet, dass** die höchste der Begrenzungsebenen um maximal 5° gegenüber der Horizontalen geneigt ist.

4. Verfahren nach Anspruch 2, **dadurch gekennzeichnet, dass** die Elemente Kunststoffzylinder mit inneren Trennwänden umfassen.

5. Verfahren nach Anspruch 4, **dadurch gekennzeichnet, dass** die Elemente zusätzlich Laschen an der Außenfläche aufweisen.

6. Verfahren zur Behandlung von städtischen Abwasser nach Anspruch 1, wobei reiner Sauerstoff mit von 10 bis 60 Nml/h pro m³ rezirkulierter Flüssigkeit, vorzugsweise mit 10 bis 50 Nml/m³ rezirkulierter Flüssigkeit, durchströmt wird.

7. Verfahren zur Behandlung von städtischem Abwasser nach Anspruch 1 oder 6, **dadurch gekennzeichnet, dass** die geometrische Steigrate zwischen 2,5 und 3,5 m/h liegt.

8. Verfahren zur Behandlung von städtischem Abwasser nach einem der Ansprüche 6 oder 7, **dadurch gekennzeichnet, dass** die täglich zugeführten Abwassermengen während der Einleitungsphase des zu behandelnden Abwassers so bemessen sind, dass die volumetrische organische Belastung in den ersten 2 Monaten der Anlaufphase weniger als 0,15 COD pro m³ Füllmaterial und Tag (kg COD/m³.d) und im dritten und vierten Monat der Anlaufphase weniger als 0,5 kg COD pro m³ Füllmaterial und Tag (kg COD/m³.d) beträgt.

9. Verfahren zur Behandlung von städtischem Abwasser nach einem der Ansprüche 6 bis 8, **dadurch gekennzeichnet, dass** die Pumpeinrichtung abgeschaltet wird, sobald die mit geeigneten Sensoren gemessenen Werte der chemischen Parameter, die die Schadstoffbelastung im Abwasser beschreiben, einen vorbestimmten Schwellenwert unterschreiten.

10. Verfahren nach einem der Ansprüche 6 bis 9, **dadurch gekennzeichnet, dass** nach der Entnahme des Abwassers aus dem Behälter, wenn der gemessene Lastverlust zwischen dem Ober- und Unterlauf des genannten porösen Mittels einen Wert zwischen 1 und 2,5 bar überschreitet, wird die Reinigungsphase des porösen Mittels durch Druckluft mit einem Druck von 1 bis 4 bar, vorzugsweise zwischen 2 und 3 bar, durchgeführt, die von unten in die Schlammzone (2) eingeblasen wird.

11. Verfahren nach Anspruch 10, **dadurch gekennzeichnet, dass** die Reinigungsphase des porösen Mittels abgebrochen wird, sobald der Druckabfall zwischen der Zu- und Abflussseite des porösen Elements weniger als 70 % des Wertes nach Anspruch 11 beträgt.

## Revendications

1. Système et procédé de traitement des eaux usées urbaines, dans lequel ledit système de traitement des eaux usées comprend :
- un réservoir (1) subdivisé en au moins deux parties distinctes (2, 3), lesdites au moins deux parties distinctes (2, 3) comprenant au moins une zone d'accumulation des boues (2) et au moins une zone d'accumulation de la phase liquide (3),
- au moins une conduite d'alimentation des eaux usées à traiter ;
- au moins une conduite de recirculation de la phase liquide ;
- au moins une conduite d'évacuation de l'effluent traité, prélevé de ladite au moins une zone d'accumulation de la phase liquide (3),
- des moyens pour l'oxygénation d'un liquide compris dans la zone de phase liquide (3), où dans ledit système
- ladite conduite d'alimentation des eaux usées à traiter est configurée de manière à ce que les eaux usées soient introduites sur le fond de ladite zone des boues ;
- à l'intérieur de ladite au moins une zone d'accumulation des boues (2), un matériau poreux, contenu entre deux plans de confinement, est configuré pour permettre la filtration des eaux usées avec élimination du matériau en suspension
- ledit réservoir (1) est subdivisé en au moins deux parties distinctes au moyen d'une ou plusieurs cloisons verticales (23) plus basses que les parois du réservoir (1), de sorte que le liquide dont le matériau en suspension a été retiré dans au moins une zone de boues (2) puisse déborder de ladite au moins une zone de boues (2) vers ladite au moins une zone de phase liquide (3) ;
- le fond de ladite au moins une zone de phase liquide (3) est relié au fond de ladite au moins une zone de boues (2) au moyen d'un tube et d'un moyen de pompage qui permettent au liquide de recirculer du fond de la zone de phase liquide (3) vers le fond de la zone de boues (2),
dans lequel ledit système comprend en outre une pompe de recirculation configurée pour faire recirculer le liquide de la zone de phase liquide (3) à la zone des boues (2) et est en outre configuré pour insuffler de l'oxygène gazeux pur dans le tube de livraison de ladite pompe de recirculation,
et dans lequel ledit procédé comprend les étapes suivantes :
- introduction des eaux usées à purifier, préalablement tamisées ou sédimentées, au fond d'au moins une zone de boues (2), de sorte que les eaux usées traversent de bas en haut ledit matériau poreux par un mouvement de piston, se séparant ainsi des matières solides en suspension, et atteignent le niveau desdites cloisons (23), d'où la seule phase liquide des eaux usées tombe dans au moins une zone de phase liquide (3) ;
- recirculation du liquide du fond de ladite zone de phase liquide (3) vers le fond de ladite zone de boues (2), de sorte que le liquide remonte, à une vitesse géométrique d'ascension comprise entre 1 et 5 m/h, le long de la hauteur de ladite au moins une zone de boues (2), traverse ledit matériau poreux et atteint le niveau desdites cloisons (23), pour retomber ensuite dans ladite au moins une zone de phase liquide (3), du fond de laquelle il est renvoyé de manière répétée, par lesdits moyens de pompage, au fond de ladite zone de boues (2) ;
- oxygénation de la phase liquide prévue dans au moins une zone de phase liquide (3) par insufflation d'oxygène gazeux pur ; dans lequel le débit dudit oxygène gazeux pur est contrôlé par le mesure de l'oxygène, de sorte que la concentration de saturation n'est pas surmontée, et ainsi l'absence de bulles dans la zone des boues est garantie
- extraction des eaux usées traitées de ladite au moins une zone de phase liquide (3).

2. Procédé selon la revendication 1, **caractérisé en ce que** ledit matériau poreux est composé d'éléments ayant une porosité supérieure à 0,8, avec des dimensions comprises entre 5 et 20 mm et avec un volume de vides interstitiels compris entre 90 et 500 mm³.

3. Procédé selon l'une quelconque des revendications précédentes, **caractérisé en ce que** le plus haut desdits plans de confinement est incliné au maximum de 5° par rapport à la direction horizontale.

4. Procédé selon la revendication 2, **caractérisé en ce que** lesdits éléments comprennent des cylindres en plastique munis de cloisons internes.

5. Procédé selon la revendication 4, **caractérisé en ce que** lesdits éléments comprennent également des languettes sur la surface externe.

6. Procédé de traitement des eaux usées urbaines selon la revendication 1, dans lequel ledit oxygène pur passe entre 10 et 60 Nml/h par m³ de liquide recirculé et de préférence entre 10 et 50 Nml/m³ de liquide recirculé.

7. Procédé de traitement des eaux usées urbaines selon la revendication 1 ou 6, **caractérisé en ce que** ladite vitesse d'ascension géométrique est comprise entre 2,5 et 3,5 m/h.

8. Procédé de traitement des eaux usées urbaines selon l'une quelconque des revendications 6 à 7, **caractérisé en ce que**, lors de l'étape d'introduction des eaux usées à traiter, les quantités journalières d'eaux usées introduites sont telles que la charge organique volumique introduite au cours des le premiers 2 mois de l'étape de démarrage est inférieure à 0,15 COD par m³ de matériau de remplissage et par jour (kg COD/m³.d), et inférieure à 0,5 kg COD par m³ de matériau de remplissage et par jour (kg COD/m³.d) au cours des troisième et quatrième mois de l'étape de démarrage.

9. Procédé de traitement des eaux usées urbaines selon l'une quelconque des revendications 6 à 8, **caractérisé en ce que** ledit arrêt des moyens de pompage se produit lorsque les valeurs des paramètres chimiques décrivant la charge polluante dans lesdites eaux usées, mesurées au moyen de capteurs appropriés, sont inférieures à un seuil prédéterminé.

10. Procédé selon l'une quelconque des revendications 6 à 9, **caractérisé en ce que**, après ladite extraction desdites eaux usées dudit réservoir, si la perte de charge mesurée entre l'amont et l'aval desdits moyens poreux dépasse une valeur comprise entre 1 et 2,5 bar, l'étape de nettoyage desdits moyens poreux est effectuée au moyen d'air comprimé à 1-4 bar, et de préférence entre 2 et 3 bar, insufflé depuis le fond de ladite zone de boues (2).

11. Procédé selon la revendication 10, **caractérisé en ce que** l'étape de nettoyage desdits moyens poreux est interrompue lorsque la perte de charge mesurée entre l'amont et l'aval desdits moyens poreux s'avère inférieure à 70 % de la valeur de la revendication 11.
